# EUROPEAN PATENT APPLICATION

(11) **EP 3 001 232 A1**
(43) Date of publication of application: **30.03.2016**
(21) Application number: 15187044.1
(22) Date of filing: 10.12.2013
(51) Int. Cl.: G02B 6/52, G02B 6/44

(54) **INSTALLATION OF PLASTIC OR POLYMER OPTICAL FIBRE FOR USE IN A NETWORK**

(30) Priority: 11.12.2012 EP 12196442
(62) Divisional of application: 13196411.6
(71) Applicant: Koninklijke KPN N.V., 2516 CK The Hague (NL); Nederlandse Organisatie voor toegepast- natuurwetenschappelijk onderzoek TNO, 2595 DA 's-Gravenhage (NL)
(72) Inventor: Stokking, Hans Maarten, 2292 CH Wateringen (NL); Hillen, Bernardus, 2725 DP Zoetermeer (NL); Smets, Robertus, 3543 JM Utrecht (NL)
(74) Representative: Wuyts, Koenraad Maria

(57) **Abstract**

An adapter is described for a plastic optical fibre (POF), also known as a polymer optical fibre (POF) which assists a POF to move along a direction of travel through a duct system. The duct system can be in a domestic or similarly sized building. A method of installing a POF in a duct system is also described. The adapter includes a portion which is shaped in such a way that an air pressure in front of the attachment is reduced when an airflow is oriented along the direction of travel of the POF when the POF and adapter combination are moved through a duct. In some embodiments this portion may also cause the airflow about the forward part to fluctuate and in particular can be angled relative to a longitudinal axis. Further adapters are described, also for the end of a duct and for an installation box.

## Description

The invention relates to an adapter for a plastic optical fibre (POF), also known as a polymer optical fibre (POF), the adapter to assist the POF to move along a direction of travel, and also relates to an adapter for a duct arranged to hold a POF, an adapter for an installation box arranged to hold a POF, a system for installing a POF in a duct arrangement and a method of installing a POF in a duct arrangement between an origin point and a delivery point.

### BACKGROUND TO THE INVENTION

Plastic optical fibre, or polymer optical fibre, both terms cover the same items and both of which can be shortened to POF, is a transmission medium for the transmission of information or data. Where either term is used the other is also meant.

POF can be used in the home, or in other small buildings, to form a network infrastructure and using POF as a transmission medium, rather than copper based CAT5 cable as is currently used, has several advantages. One advantage is the potential price that allows the installation of large number of point-to-point links to be used at the residents discretion. It is particularly suited to be used as the physical layer because it has the right bandwidth times transmission length value and can be installed in abundance to allow devices to be connected almost anywhere in the property. This would allow installation of a suitable yet economic network in a domestic property or small commercial property, for example, in small offices, on light industrial estates or in other small units.

In particular, domestic residences and other small buildings typically contain electricity conduits that can be used for POF installation. These are duct systems which run around and throughout properties and through which cable can be laid or run. POF cable could in principle be run through these ducts to provide a network through the home.

However it is a problem to install POF in available duct systems.

Pulling POF in conduits may result in damage or destruction of the medium and would in any event require a special pulling cord or pulling spring. Installation would then become a multiple step procedure. Pushing POF does not work well because at a certain point it will start to curl and bend as it comes into contact with the inner surface of the conduits or duct system. Typically duct systems include bends and it is difficult to push POF around unseen corners. Gaps and crevices present in the duct system when ducts are coupled, or because of the use of ducts that are corrugated for the purpose of bending, are known to trap the POF when pushed through the duct system. This may also result in damage or destruction of the POF.

Alternative method of installing various cables into ducts include W Griffioen, "The Installation of Conventional Fibre Optic Cables in Conduits using the Viscous Flow of Air", Journal of Lightwave Technology, Vol. 7, no. 2, (1989), page 29, which describes an industrial method of blowing a cable down a conduit from behind using an umbrella-like attachment affixed to the front of the cable. This method is not appropriate for domestic environments or for installation in other small buildings.

Another alternative is disclosed in WO 2000028366 A1, which relates to a method and to an arrangement for installing in a duct optical fibre cable elements, such as combined groups of optical fibre ribbon cables. An optical fibre ribbon cable body that has electrical contact devices provided at one end thereof and which comprises a plurality of optical fibre ribbons placed one upon the other has been held together with helically wound elastic tape with successive turns of the tape mutually overlapping. The external helical cross-surface thus obtained can be acted upon by a by-passing air stream, such as to drive the cable body forwards in the duct. The other end of the cable body is fitted with a sleeve which preferably has a rounded top and which is, e.g., glued to said end. The sleeve-fitted end of the cable body is intended to be blown into an existing duct. This method is applicable for installing a bundle of cables in ducts of great lengths, but not for domestic environments or for installation in other small buildings.

US 2003/0010965 A1 relates to a line-inserting method wherein a line member which comprises a thin nylon tape is inserted into an inlet port of the conduit. The tape comprising the line member flies into the conduit with the fluid mechanical force in an air stream. This method can be used in domestic environments where for the air stream a vacuum cleaner may be used. However, pulling the cable is necessary when this method is used, which makes it inappropriate for installing a POF.

It is a problem to arrange simple installation of a POF in an existing duct.

### SUMMARY OF THE INVENTION

The invention is defined in the claims.

This invention describes a safe technology and procedure to introduce and install POF in a conduit in a home or other small to medium sized building and can be used by a non-expert installer.

The invention includes an adapter for a plastic optical fibre (POF), which is also known as a polymer optical fibre (POF), and which assists the POF to move along a direction of travel. The adapter comprises an attachment portion, for attaching the adapter to the end of a POF, and a forward portion, which is shaped in such a way that an air pressure in front of the attachment is reduced when an airflow is oriented along the direction of travel of the POF. This reduction of pressure is called the Venturi effect.

The conduits and ducts through which the POF is to travel are typically between 8mm and 13mm internal width, or diameter, and therefore a suitable scale for the adapter is 3mm and 6mm width, and in particular between 4.4mm and 5mm, in order to fit easily into conduits and ducts.

In a particularly advantageous embodiment the adapter is used in combination with a source of artificial airflow.

The adapter is affixed or otherwise attached to the end of a POF. The adapter can be pushed on, slipped or fitted onto the end of the POF and be retained by friction, or pushed on and glued. It can further be clamped on using a clamping tool or shrunk onto the end of a POF using a shrinking tool. Alternatively and using the same material as the POF, the adapter can be moulded directly onto the end of the POF as a single step in the production process. This would require, for example, about 10 cm of extra length on the end of the POF. The extra 10 cm can then be industrially moulded or expanded to form an adapter portion.

In a particularly advantageous embodiment the inner surface of the attachment portion comprises teeth, or a tooth arrangement, angled forwards towards the inside of the forward portion. When the attachment portion of the adapter is pushed onto the end of a POF the teeth grip the outer covering of the POF and retain the POF in place within the adapter.

When the adapter is in place on the end of the POF the POF with adapter is introduced into one end of a conduit, a first conduit, through which the POF is to be fed towards its final position. At the same time a source of artificial airflow, or suction, is applied where the POF is intended to arrive. This may be at the other end of the conduit but may be at the end of another conduit, a second conduit for example, and connected to the first conduit within the conduit or duct arrangement. It may be that there is a junction, or installation, box at the point where the POF is intended to arrive, in which case the source of artificial airflow is applied to the junction, or installation, box.

Application of a source of artificial airflow causes a flow of air within the conduit or conduit system and this will cause a flow of air around the POF and adapter, the flow being towards the source of artificial airflow.

The flow of air in the direction of the source of artificial airflow passes the POF with attached adapter and the forward shape of the adapter causes a slight reduction of air pressure in front of the adapter. This slight reduction in airflow assists in guiding the POF through the conduit system in the direction of the source of artificial airflow. Now the POF can be pushed through the system by the installer and will be substantially kept clear of the sides of the conduit or duct system. When the adapter on the end of the POF meets a bend in a duct, a corner or other obstruction, such as the join between two sections of duct, the Venturi effect created in the airflow around it acts to pull it back into the centre of the duct where it can continue to move forward.

In order to create this Venturi effect, or reduction in air pressure, in front of the forward portion of the adapter, in an advantageous embodiment the forward portion is rounded. In an even more advantageous embodiment the forward portion is arranged to fluctuate the airflow about the forward part. This assists in reducing the possibility that the POF with adapter becomes stuck in the conduit system through which it is passing. The fluctuation has been found to improve the movement forwards of the POF plus adapter through a conduit system.

In a particularly advantageous embodiment the adapter is arranged about a longitudinal axis arranged substantially in the direction of travel and the forward portion is angled relative to the longitudinal axis. This form of adapter has been shown to offer surprisingly positive results in causing fluctuation of the airflow about the forward part of the adapter and therefore allows the POF to be fed through a duct system with improved forward movement, in particular when the duct comprises unseen bends.

There are several further embodiments where the adapter is arranged in such a way that fluctuation of the airflow about the forward part of the adapter is caused.

In order to apply the source of artificial airflow, or suction, to the conduit system further adapters are required.

Firstly an adapter is provided for the end of a duct or conduit and comprises an attachment portion arranged to fit an end of the conduit and an attachment portion arranged to fit a source of artificial airflow.

It is particularly advantageous if the source of artificial airflow is a vacuum cleaner. Vacuum cleaners are relatively common in domestic and small office environments and can be enlisted to provide a source of air suction to assist travel of the POF with adapter. Additionally, hand held vacuum cleaners or vacuum pumps can be used to provide air suction.

Secondly an adapter is provided for an installation box and can be advantageously used to attach a source of artificial airflow to an installation box in which the end of a POF is to be installed. The adapter comprises an attachment portion arranged to fit an open installation box, in other words an installation box with the cover open, and an attachment portion arranged to fit a source of artificial airflow. Again, it is particularly advantageous if the source of artificial airflow is a vacuum cleaner.

In particularly advantageous embodiments the adapters for the conduit and installation box are also formed in such a way that they are asymmetric, for example with respect to a longitudinal axis through the portion that attaches to the conduit or installation box, so that an effect similar to the Venturi effect is created in the adapter. In this way the adapter creates localised fluctuations of pressure and speed of airflow along the duct that adds to the effect whereby the adapters pull the POF away from the wall of the conduits or ducts.

POF can be supplied direct to the buyer with an adapter pre-supplied or pre-attached to one end, however there is a small risk that the adapter becomes damaged in some way, for example in transit or during sale, therefore it is particularly advantageous if adapters are provided for the user in kit form and in fact adapters can be provided together as a system which is convenient for application within a domestic or other small building environment. In such a case a selection of adapters can be provided together and can include, for example, 5 POF adapters in combination with 2 conduit adapters and 1 adapter for an installation box.

A method is described of installing a POF in a duct arrangement between an origin point and a delivery point. The method comprises connecting an adapter as described onto the end of a delivery point where the POF is to be placed, this delivery point may typically be a conduit, in which case a conduit adapter is attached, or an installation box in which case an adapter for an installation box is attached. Whichever adapter is used is connected to a source of artificial airflow. The method further includes arranging a POF with an adapter as described for insertion at the origin point, and this may mean either using a POF with an adapter already attached, for example in the case where a POF is sold with attached adapter, or may involve the installer attaching an adapter to the end of the POF.

The method further comprises introducing the POF into the duct arrangement at the origin point, where the POF enters the duct arrangement. Here the installer positions the POF with adapter at the entrance to the duct arrangement, typically at the entrance to a conduit. The method further includes feeding the POF with adapter into the duct arrangement while the source of artificial airflow produces suction at the delivery point, until the POF with adapter arrives at the delivery point. The source of artificial airflow is a vacuum cleaner, typically a domestic vacuum cleaner.

Once at the delivery point the adapter can be removed or otherwise pulled off or snipped off the end of the POF and the POF can be installed or otherwise fitted into the appropriate optical transceiver.

Further embodiments of the invention are shown in the figures.

### BRIEF DESCRIPTION OF THE DRAWINGS

Figure 1 shows a conduit or duct arrangement suitable for use of the invention.
Figures 2A, 2B and 2C show a variety of adapters suitable for attachment to POF and which can be used to assist in feeding the POF through a duct arrangement.
Figure 3 shows the effect of the adapter on airflow in the conduit.
Figure 4 shows adapters for a conduit and an installation box.

### DETAILED DESCRIPTION

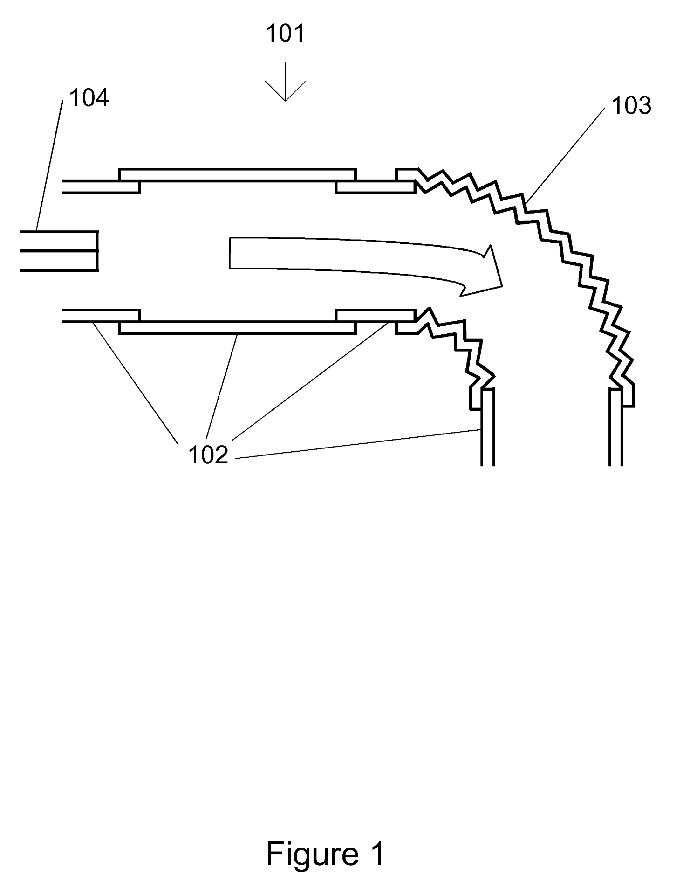

Figure 1 shows a conduit or duct arrangement 101 consisting of several pipes 102 joined together and a flexible and corrugated pipe 103 which forms a bend in the arrangement. The pipes 102 may be loosely connected to form loose joints. Alternatively they may have sealed joints with lips. A POF 104 should be threaded through the duct arrangement 101 somehow, so that it connects an origin point and a delivery point in the duct arrangement.

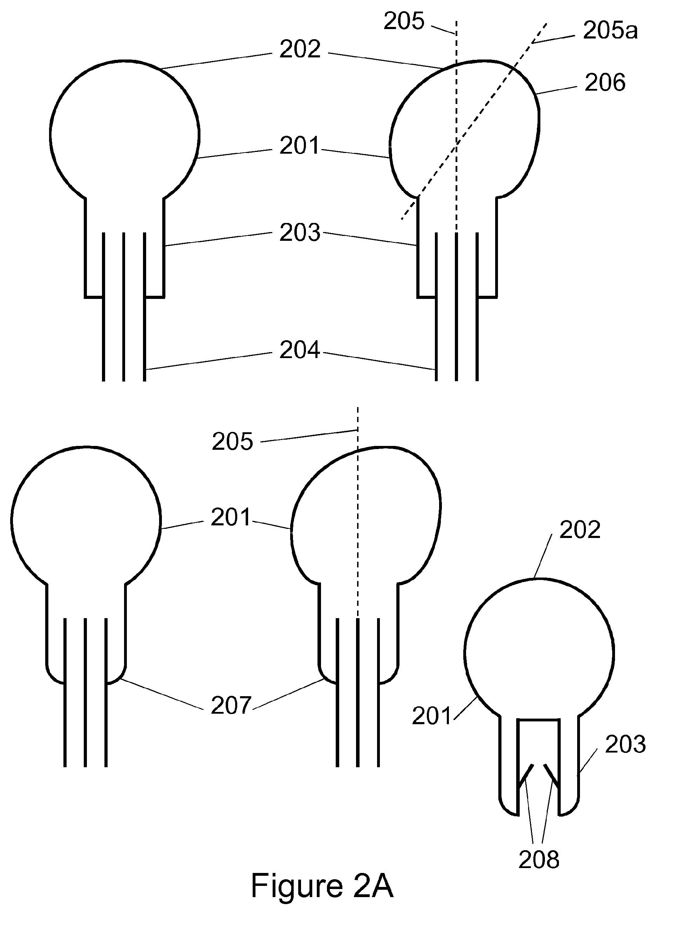

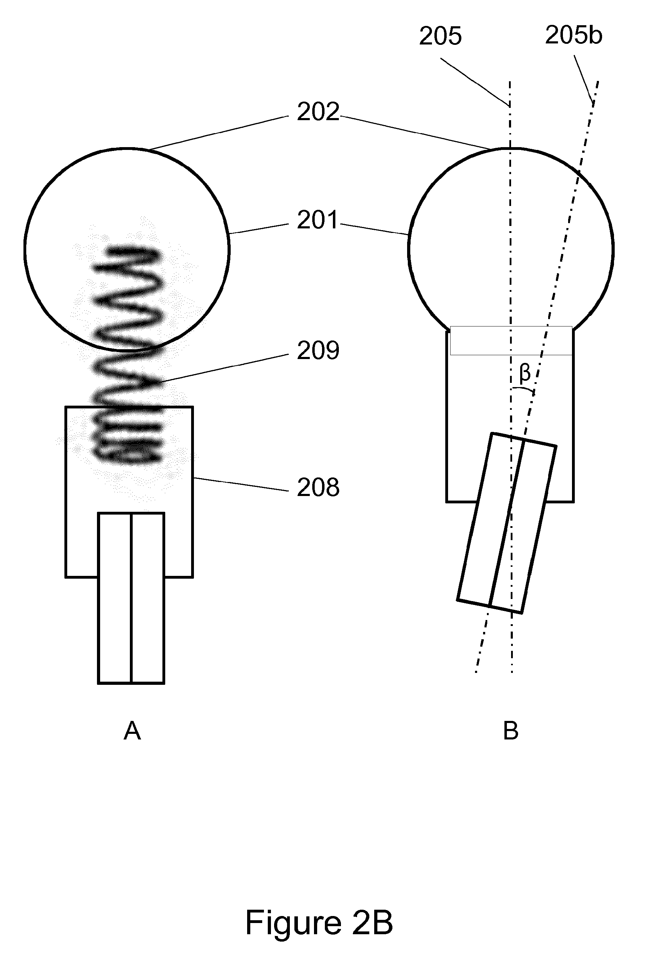

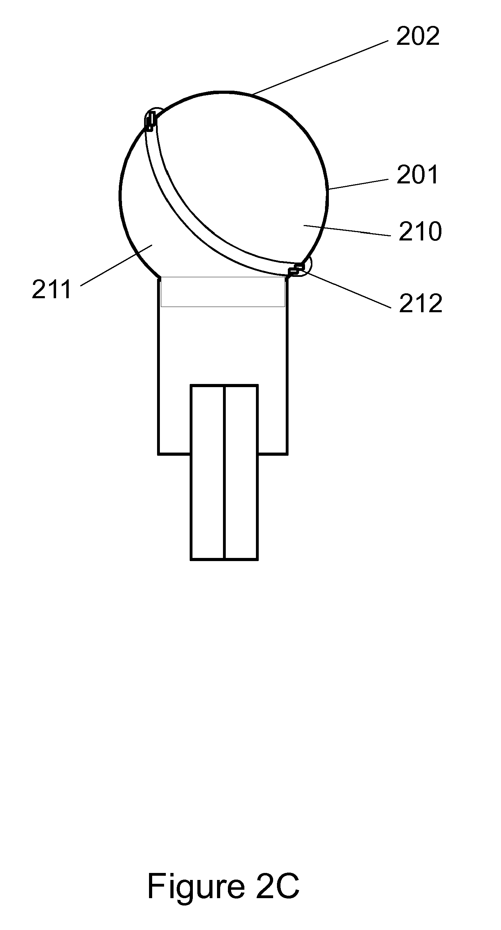

Figure 2A, 2B and 2C show a variety of adapters 201 suitable for attachment to a POF 204 and which can be used to assist in feeding the POF through a duct arrangement, for example the duct arrangement of Figure 1. Each adapter 201 comprises an attachment portion 203, for attaching the adapter to the end of the POF 204, and a forward portion 202, shaped in such a way that an air pressure in front of the attachment is reduced when an airflow is oriented along the direction of travel of the POF.

The POF 204 is shown as a bidirectional POF capable of carrying signal in both directions, but may also be a mono-directional POF, or may be a POF comprising more than 2 communication strands.

Typically, the forward portion 202 is rounded. Typically adapter 201 has a longitudinal axis 205 and in a particularly advantageous embodiment the forward portion is angled relative to longitudinal axis 205. This is shown in the embodiment of Fig. 2A in which adapter 201 comprises bulbous portion 206 angled about its own longitudinal axis 205a, which is itself angled relative to the longitudinal axis 205 of the adapter 201.

In order to improve airflow around the adapter and to improve the Venturi effect created by the shape of the forward portion the attachment portion 203 may include a rounded end or edge 207. This rounded end or edge 207 may be applied to any embodiment of the adapter 201.

In an advantageous embodiment teeth, or tooth-like gripping structures, 208 are included on the internal surface of the attachment portion 203 to assist in maintaining the adapter 201 on the end of a POF while in use. Again, teeth or tooth-like gripping structures 208 may be applied to any embodiment of the adapter 201.

In another embodiment, shown in figure 2B, an elastic element, helix or spring 209 may be used for connecting the forward portion 202 to the attachment portion 203. The elastic element 209 is mounted with one side in a cylindrical hole in the main body of adapter 201 and with the other side in the attachment portion 203. The airflow fluctuating around the forward portion 202 causes it to vibrate, and the elastic element 209 enables bending of the forward portion 202 with respect to the attachment portion 203. In another embodiment the elastic element 209 may be a leaf spring. This arrangement allows the forward portion of adapter 201 to move relative to the POF 204 and cause fluctuation of the airflow about the forward part of the adapter allowing the POF to be fed through a duct system with improved forward movement, in particular when the duct comprises unseen bends.

In yet another embodiment shown in Fig. 2B the hole where the end of the POF 204 is attached to the attachment portion 203 is angled relative to longitudinal axis 205. In this embodiment the angle of the hole for receiving POF 204 has its own longitudinal axis 205b and is angled at angle (3 to the main longitudinal axis 205 of adapter 201. This arrangement allows the forward portion of adapter 201 to move relative to the POF 204 and cause fluctuation of the airflow about the forward part of the adapter allowing the POF to be fed through a duct system with improved forward movement, in particular when the duct comprises unseen bends.

In another advantageous embodiment as shown in figure 2C, the main body of adapter 201 is formed from casting, which can provide a relatively quick and inexpensive method of forming the body of the adapter. As will be known by the person skilled in casting, a cast of a sphere can be made from two half-sphere molds, in this case molds for two half spheres 210 and 211. The casting process leaves a seam 212 and this can be retained in the adapter 201 to produce an arrangement in which the forward portion of adapter 201 is angled relative to the overall longitudinal axis of adapter 201. This angling of adapter 201 occurs as long as the seam is not arranged along an axis that is either 0 or 90 degrees with axis 205. This embodiment allows the forward portion of adapter 201 to move relative to the POF 204 and cause fluctuation of the airflow about the forward part of the adapter. In this embodiment forward portion 202 comprises the seam 212 between half spheres 210 and 211 which together form the forward portion 202, where the seam is positioned in an angle relative to longitudinal axis 205.

The invention is not limited to the embodiments shown in figure 2, combinations of the variable embodiments are possible as well as other embodiments where a forward portion 202 is shaped in such a way that an air pressure in front of the attachment is reduced when an airflow is oriented along the direction of travel of the POF.

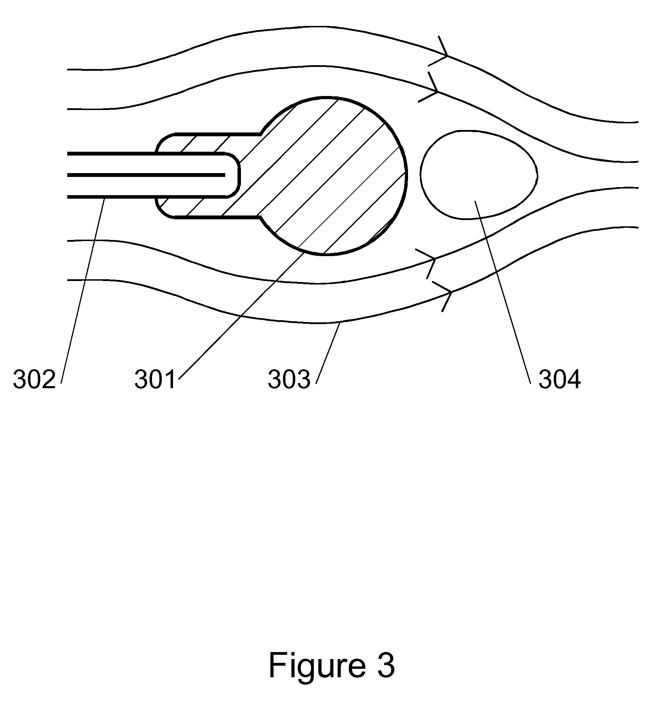

Figure 3 shows the effect of the adapter on airflow in the conduit. The adapter 301 attached to POF 302 experiences airflow 303. Adapter 301 has been designed to allow the vacuum induced airflow 303 to experience a drop in pressure or air velocity commonly known as the Venturi effect in a volume 304 in front of the adapter 301. Typically domestic conduits are not designed with a grating to reduce drag, or with other measures to prevent the fibre or cable becoming stuck at transitions such as coupling elements, for example pipes 102 of Figure 1, and small lengths of corrugated flexible conduits, for example 103 of Figure 1. Use of adapter 201 or 301 overcomes the problem of how to feed a POF through a conduit arrangement. Adapter 201 or 301 has been designed to flap in the airflow created by the vacuum cleaner and this increases the chance that the adapter stays clear of any entrapments such as bends, corrugations or transitions between pipes.

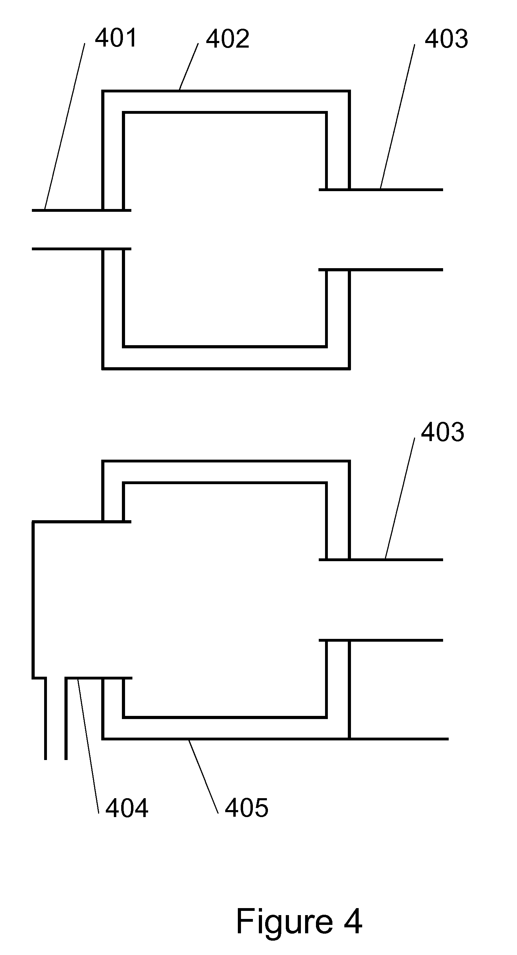

Figure 4 shows adapters for a conduit 401 and an installation box 404. A first adapter 402 has openings to admit the conduit 401 and the nozzle 403 of a source of artificial airflow, for example a vacuum cleaner. A second adapter 405 has an opening to admit the nozzle 403 of a source of artificial airflow, for example a vacuum cleaner, and an opening which can fit over an installation box 404. The opening for the installation box will vary according to regional or national standards regarding installation boxes and the skilled person will know how to construct a suitable opening. Typically, openings in adapters 402 and 405 will also comprise seals which will ensure the source of artificial airflow will cause air to flow through the duct system and not pull air in from the room in which the source is situated. In advantageous embodiments adapters fit the hose of a vacuum cleaner 403 to either a conduit 401 or from an installation box 404 in a room in a home or small building.

## Claims

1. An adapter (402) for a duct arranged to hold a POF, the adapter comprising
- an attachment portion (401) arranged to fit an end of the conduit;
- an attachment portion (403) arranged to fit a source of artificial airflow.

2. The adapter according to claim 1 wherein the attachment portions comprise a seal.

3. The adapter according to claim 1 or 2 wherein the source of artificial airflow is a vacuum cleaner.

4. An adapter (405) for an installation box arranged to hold a POF, the adapter comprising
- an attachment portion (404) arranged to fit the open installation box;
- an attachment portion (403) arranged to fit a source of artificial airflow.

5. The adapter according to claim 4 wherein the attachment portions comprise a seal.

6. The adapter according to claim 4 or 5 wherein the source of artificial airflow is a vacuum cleaner.
